# EUROPEAN PATENT APPLICATION

(11) **EP 4 534 512 A1**
(43) Date of publication of application: **09.04.2025**
(21) Application number: 24204596.1
(22) Date of filing: 04.10.2024
(51) Int. Cl.: C04B 41/00, C04B 41/52, C04B 41/89, F01D 5/28, C23C 28/04, C23C 28/00

(54) **MULTI-PHASE RADIATIVE AND THERMAL BARRIER COATING SYSTEM**

(30) Priority: 06.10.2023 US 202318377390
(71) Applicant: RTX Corporation, Farmington, CT 06032 (US)
(72) Inventor: Jackson III, Richard Wesley, Mystic, 06355 (US); Spaeth, Andrew Douglas, Holden, 01520 (US); Zhu, Tianli, Glastonbury, 06033 (US); Martin, Thomas J., East Hampton, 06424 (US)
(74) Representative: Schmitt-Nilson Schraud Waibel Wohlfrom Patentanwälte Partnerschaft mbB

(57) **Abstract**

A multi-phase radiative and thermal barrier coating system including a substrate having a substrate surface; a first layer deposited on the substrate surface; a second layer deposited on the first layer, the second layer having an outer surface, wherein the second layer comprises radiative barrier materials in a porous thermal conduction and radiant heat transfer resistant microstructure.

## Description

The present disclosure is directed to a multi-phase radiative and thermal barrier coating system. Particularly, a thermal barrier coating system in the form of a multi-layer coating, in which each layer is a single phase.

Gas turbine engines are well developed mechanisms for converting chemical potential energy, in the form of fuel, to thermal energy and then to mechanical energy for use in propelling aircraft, generating electric power, pumping fluids, etc. At this time, the major available avenue for improved efficiency of gas turbine engines appears to be the use of higher operating temperatures. However, the metallic materials used in gas turbine engines are currently very near the upper limits of their thermal stability. In the hottest portion of modern gas turbine engines, metallic materials are used at gas temperatures above their melting points. They survive because they are air cooled, but providing air cooling reduces engine efficiency.

Thermal barrier coatings are used to reduce the heat flux from the combustion gas to the load-bearing components in the combustor and the turbine hot-section. Coatings are designed to limit thermal conduction through use of low conductivity oxide materials. The combustion gas also imposes a radiative heat load onto components. State-of-the-art TBCs have high transmissivity to the spectral range of radiation (near-infrared) emitted by the combustion gas.

What is needed is a multi-phase radiative and thermal barrier coating system to reduce radiative heat flux to the load-bearing component can increase component durability.

In accordance with the present disclosure, there is provided a multi-phase radiative and thermal barrier coating system comprising a substrate having a substrate surface; a first layer deposited on the substrate surface; and a second layer deposited on the first layer, the second layer having an outer surface, wherein the second layer comprises radiative barrier materials in a radiant heat transfer resistant microstructure.

Particular embodiments further may include at least one, or a plurality of, the following optional features, alone or in combination with each other:

A further embodiment of any of the foregoing embodiments may additionally and/or alternatively include the radiative barrier materials are proximate the outer surface.

A further embodiment of any of the foregoing embodiments may additionally and/or alternatively include the first layer comprises a strain-tolerant microstructure with low thermal conductivity at an interface with the substrate surface.

A further embodiment of any of the foregoing embodiments may additionally and/or alternatively include the radiative barrier materials comprise rare-earth/transition metal oxide phase materials configured to absorb thermal radiation emitted by hot gases proximate the outer surface.

A further embodiment of any of the foregoing embodiments may additionally and/or alternatively include the radiative barrier materials comprise two classes of phases.

A further embodiment of any of the foregoing embodiments may additionally and/or alternatively include the radiative barrier materials comprise at least one of a first class of phase comprising a Ruddlesden-Popper type phase, and a second class of phase comprising a Perovskite type phase.

A further embodiment of any of the foregoing embodiments may additionally and/or alternatively include the radiative barrier materials comprise a first class of phase comprising a composition of A₂BO₄, and a second class of phase comprising a composition of ABO₃.

In accordance with the present disclosure, there is provided a turbine component having a multi-phase radiative and thermal barrier coating system comprising a component substrate having a substrate surface; a bond coat deposited on the substrate surface; a first layer deposited on the bond coat, the first layer comprising a thermal barrier coating; and a second layer deposited on the first layer, the second layer having an outer surface, wherein the second layer comprises radiative barrier materials, the radiative barrier materials comprise rare-earth/transition metal oxide phase materials configured to absorb thermal radiation emitted by hot gases proximate the outer surface.

Particular embodiments further may include at least one, or a plurality of, the following optional features, alone or in combination with each other:

A further embodiment of any of the foregoing embodiments may additionally and/or alternatively include the radiative barrier materials comprise an absorption coefficient in the near infrared spectrum of greater than 10,000 cm⁻¹.

A further embodiment of any of the foregoing embodiments may additionally and/or alternatively includethe radiative barrier materials are located at predetermined depths of the multi-phase radiative and thermal barrier coating system as measured from the outer surface toward the substrate, the predetermined depths comprising from about 1% depth to about 50% depth.

A further embodiment of any of the foregoing embodiments may additionally and/or alternatively include the radiative barrier materials comprise a thickness of between 0.01 micron and 100 microns.

A further embodiment of any of the foregoing embodiments may additionally and/or alternatively include the radiative barrier materials comprise a first class of phase comprising a composition of A₂BO₄, and a second class of phase comprising a composition of ABO₃.

A further embodiment of any of the foregoing embodiments may additionally and/or alternatively include the radiative barrier materials comprise a first class of phase selected from the group consisting of La₂Ni₁₋ₓMₓO₄ where M is selected from Mn, Fe or Co and 0<x<0.25; La_{2-y}AE_{y}NiO₄, where AE is selected from Mg, Ca, Sr, Ba and 0<y<0.8, Pr₂NiO₄, Nd₂NiO₄ La₂NiO₄; La_{1.6}Sr_{0.2}NiO₄; and a second class of phase selected from the group consisting of LaMnO₃, LaFeO₃, LaCoO₃, LaMn₁₋ₓMₓO₃ where M is selected from Fe, Co and Ni and 0<x<0.5, La_{1-y}AE_{y}MnO₃ where AE is selected from Mg, Ca, Sr, Ba and 0<y<0.5.

In accordance with the present disclosure, there is provided a process for reducing heat flux from a combustion gas to a load-bearing gas turbine engine component comprising providing a component substrate having a substrate surface; depositing a bond coat on the substrate surface; depositing a thermal barrier coating on the bond coat; the thermal barrier coating having an outer surface, wherein the thermal barrier coating comprises radiative barrier materials, the radiative barrier materials comprise rare-earth/transition metal oxide phase materials configured to absorb thermal radiation emitted by the combustion gas proximate the outer surface.

Particular embodiments further may include at least one, or a plurality of, the following optional features, alone or in combination with each other:

A further embodiment of any of the foregoing embodiments may additionally and/or alternatively include the radiative barrier materials comprise at least one of a first class of phase comprising a Ruddlesden-Popper type phase, and a second class of phase comprising a Perovskite type phase.

A further embodiment of any of the foregoing embodiments may additionally and/or alternatively include the radiative barrier materials comprise a first class of phase comprising a composition of A₂BO₄, and a second class of phase comprising a composition of ABO₃.

A further embodiment of any of the foregoing embodiments may additionally and/or alternatively include the radiative barrier materials comprise a first class of phase selected from the group consisting of La₂NiO₄; La_{1.6}Sr_{0.2}NiO₄; LaFeO_{2;} La₂CoO₄, La₂Ni_{0.88}Co_{0.12}O₄, and La_{1.5}Ca_{0.5}CoO₄; and a second class of phase selected from the group consisting of La_{0.7}Ca_{0.3}FeO₃; LaMnO₃; La_{0.8}Sr_{0.2}MnO_{3;} LaFeO₃; and La_{0.8}Ca_{0.2}CoO₃.

A further embodiment of any of the foregoing embodiments may additionally and/or alternatively include the radiative barrier materials are configured as a porous thermal conduction and radiant heat transfer resistant microstructure.

A further embodiment of any of the foregoing embodiments may additionally and/or alternatively include the radiative barrier materials are located at a predetermined depth of the multi-phase radiative and thermal barrier coating system as measured from the outer surface toward the substrate, the predetermined depth comprising up to about 50% depth.

A further embodiment of any of the foregoing embodiments may additionally and/or alternatively include the radiative barrier materials comprise an absorption coefficient in the near infrared spectrum of greater than 10,000 cm⁻¹.

The multi-phase radiative and thermal barrier coating system can contain a rare-earth/transition metal oxide phase that absorbs radiation released by combustion gases.

Other details of the multi-phase radiative and thermal barrier coating system are set forth in the following detailed description and the accompanying drawings wherein like reference numerals depict like elements.
Fig. 1 is a cross section view of an exemplary gas turbine engine.
Fig. 2 is a schematic representation of a turbine engine component having a multi-phase radiative and thermal barrier coating system in accordance with the present disclosure deposited thereon.
Fig. 3 is a schematic representation of a turbine engine component having a multi-phase radiative and thermal barrier coating system in accordance with the present disclosure deposited thereon.

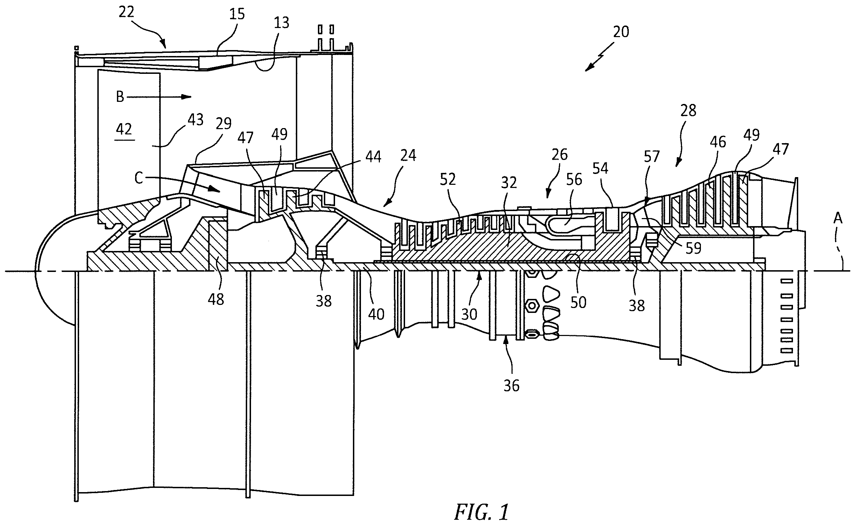

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of pounds-mass per hour lbm/hr of fuel flow rate being burned divided by pounds-force lbf of thrust the engine produces at that minimum point. The engine parameters described above, and those in the next paragraph are measured at this condition unless otherwise specified.

"Low fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The low fan pressure ratio is a spanwise average of the pressure ratios measured across the fan blade 43 alone over radial positions corresponding to the distance. The low fan pressure ratio can be less than or equal to 1.45, or more narrowly greater than or equal to 1.25, such as between 1.30 and 1.40. "Low corrected fan tip speed" is the actual fan tip speed in ft/sec divided by an industry standard temperature correction of [(Tram °R) / (518.7 °R)]^{0.5}. The "low corrected fan tip speed" can be less than or equal to 1150.0 ft / second (350.5 meters/second), and greater than or equal to 1000.0 ft / second (304.8 meters/second).

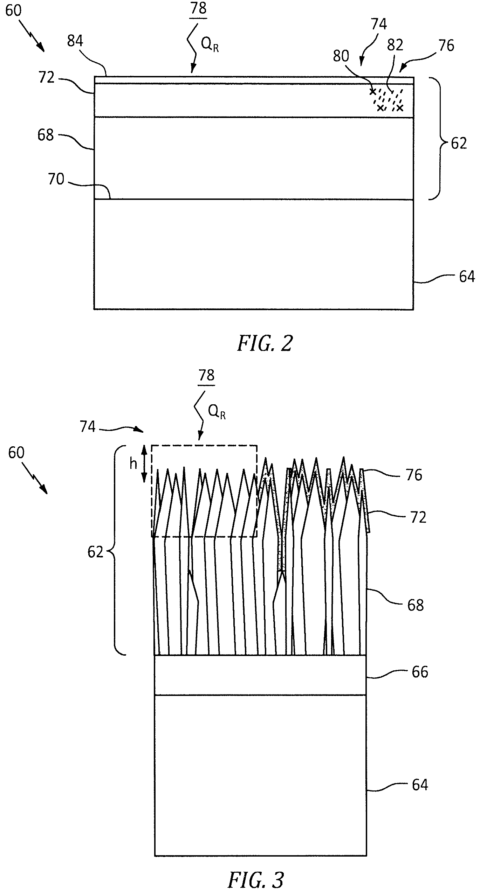

Referring now to FIG. 2 and Fig. 3, there is shown a turbine engine component 60. The turbine engine component 60 may be any component which requires a thermal barrier coating 62 such as a component in the combustor or turbine hot section. The turbine engine component 60 has a substrate 64 formed from any suitable material including, but not limited to, a nickel based alloy, a cobalt based alloy, a titanium based alloy, a ceramic material, and an organo-matrix composite material.

The thermal barrier coating 62 can be a multi-phase radiative and thermal barrier coating system 62 deposited on the substrate 64. The multi-phase radiative and thermal barrier coating system 62 can be deposited on a bond coat 66, see Fig. 3. The multi-phase radiative and thermal barrier coating system 62 can have a first layer 68 which interfaces with the surface 70 of the substrate 64, see Fig. 2 or bond coat 66, see Fig. 3. The multi-phase radiative and thermal barrier coating system 62 can include an outer second layer 72. The first layer 68 may be formed so as to have a strain-tolerant columnar microstructure at the interface with the surface 70 of the substrate 64 or bond coat 66. In other cases, the strain tolerance in the layer may be imparted through equiaxed pores, typical of thermally sprayed coatings. The second layer 72 may be formed to have a porous thermal conduction and radiant heat transfer resistant microstructure at an outer surface 74 of the multi-phase radiative and thermal barrier coating system 62. In an alternative embodiment, the first layer 68 can be formed from two materials, a thin layer of YSZ is directly deposited on the metallic substrate surface 70 and a thicker layer of Gd2Zr2O7 is deposited on the thin layer of YSZ. The hot combustion gas 78 of gas turbine engines is at elevated temperature in the combustor and in the turbine where the hot gas 78 is in contact with combustor liners, blades, vanes, and blade outer air seals. This hot gas 78 can transfer heat to the engine components through convection. The hot gas 78 can also transfer heat through radiation Q_{R}. At the operating temperatures typical of gas turbines, between 1000°C and 3000°C, the peak radiative intensity falls in the near infrared region, between 0.8 and 4 micrometers. The distribution of radiative as a function of wavelength can be described by the Plank distribution and the emissivity of the constituents of the combustion products. As the peak radiative intensity is in the near infrared range, it is advantageous for the coatings that protect the hot-section components to block the radiation from transmitting to the components. Typical materials that are used as thermal barrier coatings are known to be high transmissive to near infrared radiation.

The second layer 72 can include radiative barrier materials 76 that include rare-earth/transition metal oxide phase materials. The radiative barrier materials of the second layer 72 are configured to absorb thermal radiation Q_{R} emitted by hot gases 78 proximate the outer surface 74. In an exemplary embodiment, the radiative barrier materials 76 can include two classes of phases. A first class of phase 80 can include a Ruddlesden-Popper type phase, which have the nominal chemical composition A₂BO₄. A second class of phase 82 can include a Perovskite type phase, which have the nominal chemical composition ABO₃.

In an exemplary embodiment, the first class phase 80 can comprise a composition of A₂BO₄, such as La₂NiO₄; La_{1.6}Sr_{0.2}NiO₄; LaFeO₃; La₂CoO₄, La₂Ni_{0.88}Co_{0.12}O₄, or La_{1.5}Ca_{0.5}CoO₄. In an exemplary embodiment, the radiative barrier materials 76 comprise a first class of phase selected from the group consisting of La₂Ni₁₋ₓMₓO₄ where M is selected from Mn, Fe or Co and 0<x<0.25; La_{2-y}AE_{y}NiO₄, where AE is selected from Mg, Ca, Sr, Ba and 0<y<0.8, Pr₂NiO₄, Nd₂NiO₄ La₂NiO₄; La_{1.6}Sr_{0.2}NiO₄. In an exemplary embodiment, the first class phase 80 can comprise a solid solution including (La₁₋ₓCaₓ₎CoO₄ where 0.25 < x < 0.35. These compositions were tetragonal K₂NiF₄ type phases. The La₂NiO₄ material composition can provide advantages because La is strongly reactive with CMAS (660 of the cations), has a high CTE similar to a Ni-based superalloy. Additionally, La and Ni have a low vapor-pressure.

In an exemplary embodiment, the second class phase 82 can be selected from the group consisting of LaMnO₃, LaFeO₃, LaCoO₃, LaMn₁₋ₓMₓO₃ where M is selected from Fe, Co and Ni and 0<x<0.5, La_{1-y}AE_{y}MnO₃ where AE is selected from Mg, Ca, Sr, Ba and 0<y<0.5. The second class phase 82 can include a composition of ABO₃, such as La_{0.7}Ca_{0.3}FeO₃; LaMnO₃; or La_{0.B}Sr_{0.2}MnO_{3;} LaFeO₃; or La_{0.8}Ca_{0.2}CoO₃. The La_{0.8}Sr_{0.2}MnO₃ material can provide advantages because La is strongly reactive with CMAS (50% of the cations), has a high CTE similar to a Ni-based superalloy, and the La, Sr, Mn have low vapor-pressures.

In an exemplary embodiment, the multi-phase radiative and thermal barrier coating system 62 can include a first layer 68 comprising Gd₂Zr₂O₇; an second layer comprising La₂NiO₄, and a nickel based bond coat 66 deposited on a superalloy substrate 64.

In Fig. 2 and Fig. 3 the radiative barrier materials 76 are shown predominantly located in the second layer 72 proximate the outer surface 74. In exemplary embodiments the radiative barrier materials 76 can be located at various depths h of the multi-phase radiative and thermal barrier coating system 62 as measured from the outer surface 74 toward the substrate 64 as shown in Fig. 3. In an exemplary embodiment the radiative materials 76 can be located up to about 50% depth. In another exemplary embodiment the radiative materials 76 can be located from about 1% depth to about 25% depth. In another exemplary embodiment the radiative materials 76 can be located from about 1% depth to about 10% depth.

The thickness of the second layer 72 with the radiative barrier material 76 is related to the ability of the material to absorb radiation. The absorption coefficient, ε, (units of reciprocal length, e.g. cm⁻¹). The ability of the material to reduce the radiative flux can described by the Beer-Lambert law, the intensity of radiation that passes through the material, I, is related to the intensity of the incident radiation, I₀, the layer thickness, z, and the absorption coefficient, ε. The equation that expresses this relationship is I = I₀Exp(-ε z) .

In certain cases, it is desired that the transmitted radiation, I, is less than 50% of the incident radiation. It is more preferred that the transmitted radiation, I, is less than 5% of the incident radiation. The relationship between absorption coefficient and accompanying coating thickness needed to impart a specified reduction in transmitted intensity is presented in Table 1 below.

| radiation intensity | | Absorption coefficient | Thickness | |
|---|---|---|---|---|
| I | I_0 | ε | z | |
| W/m² | W/m² | cm⁻¹ | cm | µm |
| 50% | 100% | 50 | 0.013863 | 138.6 |
| 50% | 100% | 100 | 0.006931 | 69.3 |
| 50% | 100% | 500 | 0.001386 | 13.9 |
| 50% | 100% | 500 | 0.001386 | 13.9 |
| 50% | 100% | 1000 | 0.000693 | 6.93 |
| 50% | 100% | 5000 | 0.000139 | 1.39 |
| 50% | 100% | 10000 | 6.93E-05 | 0.693 |
| 50% | 100% | 50000 | 1.39E-05 | 0.139 |
| 50% | 100% | 1000000 | 6.93E-07 | 0.007 |
| 5% | 100% | 5000 | 0.000599 | 5.99 |
| 5% | 100% | 10000 | 0.0003 | 3.00 |
| 5% | 100% | 50000 | 5.99E-05 | 0.60 |
| 5% | 100% | 1000000 | 3E-06 | 0.03 |

In an exemplary embodiment the thickness of the radiative barrier material 76 can be between 0.01 micron and 100 microns. In another embodiment the thickness of the radiative barrier material 76 can be between 1 micron and 50 microns. In an exemplary embodiment the thickness of the radiative barrier material 76 can be a thickness between 1 micrometer and 25 micrometers. In an exemplary embodiment the radiative barrier materials 76 comprise an absorption coefficient in the near infrared spectrum of between 5,000 and 50,000 cm⁻¹. The radiative barrier materials 76 can have an absorption coefficient in the near infrared spectrum of greater than 10,000 cm⁻¹.

In an exemplary embodiment, it may be advantageous for the radiative barrier material to not be located on the outer surface 74 of the thermal barrier coating 62. If the radiative barrier materials 76 are not on the outer surface 74 of the thermal barrier coating 62, it is less likely to be altered by impact from particles that may be present in the gas stream 78. In this embodiment, a protective barrier layer 84 can be disposed on the outer surface 74 of the second layer 72. The protective barrier layer 84 can be composed of the thermal barrier material.

A technical advantage of the discloses multi-phase radiative and thermal barrier coating system includes improving the durability of a thermal barrier coating by reducing the radiative heat flux to the superalloy substrate, thus increasing the durability and enabling higher engine operating temperatures increasing efficiency.

There has been provided a multi-phase radiative and thermal barrier coating system. While the multi-phase radiative and thermal barrier coating system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A multi-phase radiative and thermal barrier coating system comprising:
a substrate having a substrate surface;
a first layer deposited on the substrate surface; and
a second layer deposited on the first layer, the second layer having an outer surface, wherein the second layer comprises radiative barrier materials in a radiant heat transfer resistant microstructure.

2. The multi-phase radiative and thermal barrier coating system according to claim 1, wherein the radiative barrier materials are proximate the outer surface.

3. The multi-phase radiative and thermal barrier coating system according to claim 1 or 2, wherein the first layer comprises a strain-tolerant microstructure with low thermal conductivity at an interface with the substrate surface.

4. The multi-phase radiative and thermal barrier coating system according to any of claims 1 to 3, wherein the radiative barrier materials comprise rare-earth/transition metal oxide phase materials configured to absorb thermal radiation emitted by hot gases proximate the outer surface.

5. The multi-phase radiative and thermal barrier coating system according to any of claims 1 to 4, wherein the radiative barrier materials comprise two classes of phases.

6. The multi-phase radiative and thermal barrier coating system according to any of claims 1 to 5, wherein the radiative barrier materials comprise at least one of a first class of phase comprising a Ruddlesden-Popper type phase comprising a composition of A₂BO₄, and a second class of phase comprising a Perovskite type phase comprising a composition of ABO₃.

7. The multi-phase radiative and thermal barrier coating system according to any of claims 1 to 6, wherein the radiative barrier materials comprise an absorption coefficient in the near infrared spectrum of between 5,000 and 50,000 cm-1 and a thickness between 1 micrometer and 25 micrometers.

8. A turbine component having a multi-phase radiative and thermal barrier coating system according to any of claims 1 to 7, wherein:
a component substrate has a substrate surface;
a bond coat is deposited on the substrate surface;
the first layer is deposited on the bond coat, the first layer comprising a thermal barrier coating; and
the second layer is deposited on the first layer, the second layer having an outer surface, wherein the second layer comprises radiative barrier materials, the radiative barrier materials comprise rare-earth/transition metal oxide phase materials configured to absorb thermal radiation emitted by hot gases proximate the outer surface.

9. The turbine component having a multi-phase radiative and thermal barrier coating system according to claim 8, wherein the radiative barrier materials comprise an absorption coefficient in the near infrared spectrum of greater than 10,000 cm⁻¹.

10. The turbine component having a multi-phase radiative and thermal barrier coating system according to claim 8 or 9, wherein the radiative barrier materials are located at predetermined depths of the multi-phase radiative and thermal barrier coating system as measured from the outer surface toward the substrate, the predetermined depths comprising from about 1% depth to about 50% depth: and/or
wherein the radiative barrier materials comprise a thickness of between 0.01 micron and 100 microns.

11. The turbine component having a multi-phase radiative and thermal barrier coating system according to any of claims 8 to 10, wherein the radiative barrier materials comprise a first class of phase selected from the group consisting of La₂Ni₁₋ₓMₓO₄ where M is selected from Mn, Fe or Co and 0<x<0.25; La_{2-y}AE_{y}NiO₄, where AE is selected from Mg, Ca, Sr, Ba and 0<y<0.8, Pr₂NiO₄, Nd₂NiO₄ La₂NiO₄; La_{1.6}Sr_{0.2}NiO₄; and a second class of phase selected from the group consisting of LaMnO₃, LaFeO₃, LaCoO₃, LaMn₁₋ₓMₓO₃ where M is selected from Fe, Co and Ni and 0<x<0.5, La_{1-y}AE_{y}MnO₃ where AE is selected from Mg, Ca, Sr, Ba and 0<y<0.5.

12. A process for reducing heat flux from a combustion gas to a load-bearing gas turbine engine component comprising:
providing a component substrate having a substrate surface;
depositing a bond coat on the substrate surface;
depositing a thermal barrier coating on the bond coat; the thermal barrier coating having an outer surface, wherein the thermal barrier coating comprises radiative barrier materials, the radiative barrier materials comprise rare-earth/transition metal oxide phase materials configured to absorb thermal radiation emitted by the combustion gas proximate the outer surface.

13. The process of claim 12, wherein the radiative barrier materials comprise at least one of a first class of phase comprising a Ruddlesden-Popper type phase, and a second class of phase comprising a Perovskite type phase; and/or
wherein the radiative barrier materials comprise a first class of phase comprising a composition of A₂BO₄, and a second class of phase comprising a composition of ABO₃.

14. The process of claim 12 or 13, wherein the radiative barrier materials comprise a first class of phase selected from the group consisting of La₂NiO₄; La_{1.6}Sr_{0.2}NiO₄; LaFeO₃; La₂CoO₄, La₂Ni_{0.88}Co_{0.12}O₄, and La_{1.5}Ca_{0.5}CoO₄; and a second class of phase selected from the group consisting of La_{0.7}Ca_{0.3}FeO₃; LaMnO₃; La_{0.8}Sr_{0.2}MnO_{3;} LaFeO₃; and La_{0.8}Ca_{0.2}CoO₃; and/or
wherein the radiative barrier materials are configured as a porous thermal conduction and radiant heat transfer resistant microstructure.

15. The process of any of claims 12 to 14, wherein the radiative barrier materials are located at a predetermined depth of the multi-phase radiative and thermal barrier coating system as measured from the outer surface toward the substrate, the predetermined depth comprising up to about 50% depth;
wherein the radiative barrier materials comprise an absorption coefficient in the near infrared spectrum of greater than 10,000 cm⁻¹.
